# EUROPÄISCHE PATENTANMELDUNG

(11) **EP 1 234 642 A1**
(43) Veröffentlichungstag der Anmeldung: **28.08.2002**
(21) Anmeldenummer: 02003810.5
(22) Anmeldetag: 20.02.2002
(51) Int. Cl.: B25J 9/10

(54) **Handhabungsvorrichtung mit zwei Gelenkarmen**

(30) Priorität: 21.02.2001 DE 10108321
(71) Anmelder: A + F Automation + Fördertechnik GmbH, 32278 Kirchlengern (DE)
(72) Erfinder: Bergmeyer, Joachim, 32584 Löhne (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Eine Handhabungsvorrichtung insbesondere in einer Verpakkungsmaschine umfaßt eine Hand (23) zur Aufnahme einer Nutzlast und eine die Hand lagernde Tragvorrichtung, die von zwei in einer gemeinsamen Ebene motorisch verstellbaren, mehrgliedrigen Gelenkarmen (14,15) gebildet ist, die an ihrem einen Ende an einen Drehantrieb (13a,13b) und an ihrem entgegengesetzten Ende gelenkig an die Hand (23) angeschlossen sind. Jeder Gelenkarm (14,15) umfaßt ein oberes Armglied (14a,15a) und ein gelenkig damit verbundenes unteres Armglied (14b,15b), das an die Hand (23) angelenkt ist. Um auch bei relativ hohen Nutzlasten eine schnelle Verstellbewegung zu gewährleisten, ist jedem Gelenkarm (14,15) ein separater Drehantrieb (13a,13b) zugeordnet, der auf das obere Armglied (14a,15a) des jeweiligen Gelenkarms (14,15) einwirkt, und die unteren Armglieder (14b,15b) sind jeweils als ebenes Stabfachwerk ausgebildet.

## Beschreibung

Die Erfindung betrifft eine Handhabungsvorrichtung insbesondere in einer Verpackungsmaschine, mit einer Hand zur Aufnahme einer Nutzlast und einer die Hand lagernden Tragvorrichtung, die zwei in einer gemeinsamen Ebene motorisch verstellbare, mehrgliedrige Gelenkarme umfaßt, die an ihrem einen Ende an einen Drehantrieb und an ihrem entgegengesetzten Ende gelenkig an die Hand angeschlossen sind, wobei jeder Gelenkarm ein oberes Armglied und ein gelenkig damit verbundenes unteres Armglied umfaßt, das an die Hand angelenkt ist.

In vielen Bereichen der Industrie ist es notwendig, ein Produkt während eines Produktions- oder Bearbeitungsvorganges zu handhaben, womit beispielsweise das Umsetzen, Stapeln, Einschieben etc. verstanden werden kann. Während früher diese Vorgänge im wesentlichen manuell ausgeführt wurden, finden heutzutage in der Regel motorisch angetriebene Handhabungsvorrichtungen Verwendung, die eine sogenannte Hand aufweisen, an der die Aufnahme für die Nutzlast, beispielsweise eine Handhabungswerkzeug in Form eines Greifers anbringbar ist. Die Hand ist üblicherweise über einen Arm verstellbar gelagert und kann durch entsprechende Ansteuerung des Armes eine vorbestimmte Bewegung mit hoher Genauigkeit wiederholen. Bei den sogenannten Industrierobotern ist meistens ein von einem Fuß frei auskragender Gelenkarm vorgesehen, der an seinem vorderen Ende die Hand trägt. Bei höheren Werkzeuggewichten ist ein frei auskragender Gelenkarm jedoch nachteilig, da sich am Fuß relativ hohe aufzunehmende Biege- und Kippmomente ergeben, die mit einer aufwendigen Konstruktion aufgenommen werden müssen. Darüber hinaus muß der Gelenkarm zur Aufnahme der Belastungen entsprechend stark dimensioniert sein, wodurch sein Gewicht erhöht ist, was hohe Antriebskräfte und entsprechend verringerte Verstellgeschwindigkeiten mit sich bringt.

Aus der DE 38 12 335 A1 ist eine Handhabungsvorrichtung des eingangs genannten Aufbaus bekannt, bei der die Gelenkarme durch einen gemeinsamen Antrieb verstellbar und über Zahnräder gekoppelt sind. Dabei sind die Hebel als massive stählerne Leisten ausgebildet, wodurch eine ausreichende Steifigkeit gegeben ist, um die aus einer relativ hohen Nutzlast der Hand resultierenden Kräfte und Spannungen sicher aufzunehmen. Jedoch ist die Masse der zu bewegenden Teile auf diese Weise relativ groß, so daß die für die Verstellung notwendige Zeit (Taktzeit) erhöht ist. Bei Verwendung leichterer Materialien läßt sich zwar die zu bewegende Masse verringern, jedoch ist damit auch die Verminderung der Steifigkeit verbunden. Darüber hinaus sind die Verstellmöglichkeiten der Handhabungsvorrichtung stark beschränkt.

Der Erfindung liegt die Aufgabe zugrunde, eine Handhabungsvorrichtung insbesondere in einer Verpackungsmaschine zu schaffen, die auch bei relativ hohen Nutzlasten eine schnelle und variable Verstellbewegung gewährleistet.

Diese Aufgabe wird bei einer Handhabungsvorrichtung der genannten Art erfindungsgemäß dadurch gelöst, daß jedem Gelenkarm ein separater Drehantrieb zugeordnet ist, der auf das obere Armglied des jeweiligen Gelenkarms einwirkt, und daß die untere Armglieder jeweils als ebenes Stabfachwerk ausgebildet sind.

Die oberen Armglieder sind vorzugsweise als ausreichend biege- und torsionssteife Bauteile aus einem möglichst leichten Material ausgebildet. In einer speziellen Ausführungsform sind die beiden oberen Armglieder von identischen oder spiegelbildlich identischen Bauteilen gebildet. Um die zu verstellende Masse möglichst gering zu halten, ist erfindungsgemäß vorgesehen, daß die unteren Armglieder jeweils als ebenes Stabfachwerk ausgebildet werden, deren Längsstäbe nur auf Normalkraft, d.h. auf Druck oder Zug, belastet werden und eine nur geringe Torsionsfestigkeit aufzuweisen brauchen. Auch die beiden unteren Armglieder sollten als identische oder spiegelbildlich identische Bauteile ausgebildet sind. Auf diese Weise ist ein günstiges Verhältnis von mechanischer Steifigkeit zu dem Gewicht erreicht, was dadurch gewährleistet wird, daß die Biege- und Torsionsbeanspruchung im wesentlichen auf die oberen Armglieder beschränkt sind.

Dabei kann vorgesehen sein, daß jedes untere Armglied mit zumindest zwei in Längsrichtung des Armglieds verlaufenden Längsstreben und zumindest einer Diagonalstrebe ausgebildet ist. Die Längsstreben des Stabfachwerks der unteren Armglieder verlaufen in Richtung der überwiegenden Zug- und Druckkräfte, wobei die Fachwerkkonstruktion es ermöglicht, das Material an dem für den Kraftfluß notwendigen Stellen zu konzentrieren, so daß sich eine sehr gute Materialausnutzung ergibt. Auf diese Weise ist die Verwendung relativ geringer Materialquerschnitte möglich und es ergibt sich eine hohe Steifigkeit bei geringem Gewicht. Dies wird unterstützt durch die vorzugsweise Verwendung von Materialien mit einem günstigen Verhältnis von Gewicht zu Steifigkeit, d.h. beispielsweise von Kohlefaser-Material oder hochfesten Aluminiumlegierungen.

Eine sehr geringe Bautiefe der Handhabungsvorrichtung ergibt sich, wenn in Weiterbildung der Erfindung vorgesehen ist, daß die Enden der Längsstreben jedes unteren Armglieds das zugeordnete obere Armglied zwischen sich aufnehmen.

Aufgrund der Lagerung der Hand über zwei Gelenkarme sind statisch günstige Verhältnisse gegeben, die es ermöglichen, übermäßige Kippmomente zu vermeiden und auch hohe Nutzlasten in einfacher Weise sicher aufzunehmen und abzuleiten. Die Vermeidung oder zumindest wesentliche Reduzierung von Kipp- und Biegemomenten ermöglicht es, die Gelenkarme schlank auszubilden, wodurch wiederum ihr Gewicht verringert ist, was eine hohe Verstellgeschwindigkeit und kurze Taktzeiten ermöglicht.

Da beide Gelenkarme jeweils einen eigenen Drehantrieb aufweisen, läßt sich die Hand in der von den beiden Gelenkarmen überstrichenen gemeinsamen Ebene mit hoher Genauigkeit und in einem relativ großen Bereich verstellen.

Die erfindungsgemäße Handhabungsvorrichtung findet vorzugsweise in einer Verpackungsmaschine Verwendung. Die Einsatzmöglichkeiten sind jedoch darauf nicht beschränkt, sondern sie kann in gleichartig vorteilhafter Weise unter anderem auch bei Förder- und Transportanlagen, Palettieranlagen oder auch bei Steigenform- und Verklebemaschinen Verwendung finden.

Beide Gelenkarme sind als zweigliedrige Gelenkarme ausgebildet und umfassen ein mit dem jeweiligen Drehantrieb gekoppeltes oberes Armglied und ein gelenkig damit verbundenes unteres Armglied, das an die Hand angelenkt ist. Der gelenkige Anschluß der unteren Armglieder an die Hand kann in verschiedenen Bereichen der Hand, d.h. jeweils an eigenen Drehachsen erfolgen, vorzugsweise ist jedoch vorgesehen, daß die unteren Armglieder an einer gemeinsamen Drehachse an die Hand angelenkt sind. Dabei kann vorgesehen sein, daß die unteren Enden der Längsstreben jedes unteren Armglieds in entgegengesetzten Endbereichen der Drehachse angeordnet sind und die Hand zumindest teilweise zwischen sich aufnehmen.

Die beiden Drehantriebe der Gelenkarme sind vorzugsweise jeweils von einem Servomotor gebildet, wobei die Drehachsen parallel zueinander verlaufen und im wesentlichen horizontal ausgerichtet sind, während die Hand in einer senkrecht dazu verlaufenden vertikalen Ebene verstellbar ist.

In besonderen Anwendungsfällen ist es wünschenswert, daß die Ausrichtung der Hand relativ zu einer Bezugsebene oder Basis während der Verstellbewegung gleichbleibt, d.h. die Hand eine reine Translationsbewegung ohne Schwenkung oder Rotation ausführt. Dies kann bei der erfindungsgemäßen Handhabungsvorrichtung dadurch erreicht werden, daß eine Ausgleichsvorrichtung vorgesehen ist, mittels der die Hand bei ihrer Verstellbewegung in vorbestimmter Ausrichtung relativ zu der Basis gehalten wird. Dabei kann die Ausgleichsvorrichtung zumindest zwei hintereinandergeschaltete Parallelogrammgestänge umfassen. Die eine Längsstrebe des oberen Parallelogrammgestänges wird durch eines der oberen Armglieder gebildet, dem eine obere Ausgleichsstange parallel zugeordnet ist. Darüber hinaus umfaßt das obere Parallelogrammgestänge einen am Gelenk dieses oberen Armglieds gelenkig gelagerten Übertragungsrahmen, an dem die obere Ausgleichsstange im Abstand zum Gelenk gelenkig angeschlossen ist. Das untere Parallelogrammgestänge weist als eine ihrer Längsstreben das zugeordnete untere Armglied auf, dem eine untere Ausgleichsstange parallelgeschaltet ist, die an ihrem oberen Ende an dem Übertragungsrahmen im Abstand zum Gelenk gelenkig angeschlossen ist und an ihrem unteren Ende gelenkig an die Hand angeschlossen ist. Dabei kann vorgesehen sein, daß die untere Ausgleichsstange mit ihrem unteren Ende das andere untere Armglied durchdringt.

Falls statt einer reinen Translationsbewegung der Hand eine Schwenkung der Hand gewünscht wird, kann in Weiterbildung der Erfindung vorgesehen sein, daß die Hand schwenkbar gelagert ist und einen eigenen Drehantrieb aufweist, der beispielsweise aus einem Servomotor und einem nachgeschalteten Getriebe besteht und mittels dessen die Hand um eine gemeinsame Drehachse mit zumindest einem der unteren Armglieder geschwenkt werden kann.

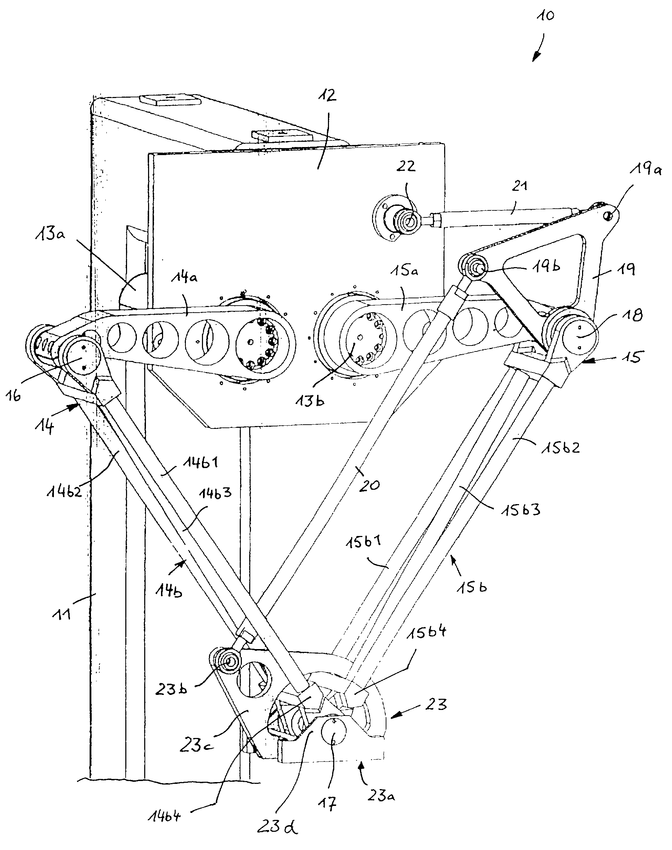

Weitere Einzelheiten und Merkmale der Erfindung sind aus der folgenden Beschreibung eines Ausführungsbeispiel unter Bezugnahme auf die Zeichnung ersichtlich, wobei die einzige Figur eine perspektivische Ansicht einer Handhabungsvorrichtung zeigt.

In der Figur ist eine Handhabungsvorrichtung 10 gezeigt, die an einem galgenartigen Ständer 11 montiert ist, der in nicht dargestellter Weise auf dem Erdboden fest aufgelagert ist. Am vorderen Ende des galgenartigen Ständers 11 ist eine sich vertikal erstreckende Grundplatte 12 angebracht, die zwei nebeneinander angeordnete, gleichartige Drehantriebe in Form von Servomotoren 13a und 13b mit integriertem Getriebe derart lagert, daß die Drehachsen der Servomotoren 13a und 13b im wesentlichen horizontal und parallel zueinander verlaufen. Jeder Servomotor 13a bzw. 13b ist direkt mit dem oberen Ende eines zweigliedrigen Gelenkarms 14 bzw. 15 gekoppelt. Jeder Gelenkarm 14 bzw. 15 umfaßt eine oberes Armglied 14a bzw. 15a, das an seinem oberen Ende mit dem jeweiligen Servomotor 13a bzw. 13b verbunden ist und durch diesen verschwenkt werden kann. Die beiden oberen Armglieder 14a und 15a sind als leichte, biege- und torsionssteife Bauteile spiegelbildlich identischer Form ausgebildet.

An dem dem Servomotor 13a bzw. 13b abgewandten unteren Ende der oberen Armglieder 14a und 15a ist jeweils ein unteres Armglied 14b bzw. 15b über ein Gelenk 16 bzw. 18 mit horizontaler Schwenkachse, die parallel zu den Drehachsen der Servomotoren 13a und 13b verlaufen, gelenkig angeschlossen. Jedes untere Armglied 14b, 15b ist als schlankes, ebenes und leichtes Fachwerk mit zwei in Längsrichtung des Armglieds 14b, 15b verlaufenden Längsstreben 14b1,14b2 bzw. 15b1, 15b2 und einer Diagonalstrebe 14b3 bzw. 15b3 ausgebildet. Die Längsstreben 14b1,14b2 bzw. 15b1 und 15b2 sind dabei an ihrem oberen Ende auf verschiedenen Seiten des jeweiligen oberem Armglieds 14a,15a angeordnet, so daß das untere Ende jedes oberen Armglieds 14a,15a, an dem das Gelenk 16 bzw. 18 ausgebildet ist, zwischen den beiden Längsstreben 14b1,,14b2 bzw. 15b1,15b2 des zugeordneten unteren Armglieds 14b,15b liegt. Auf diese Weise ist einerseits eine gute, symmetrische Kraftübertragung zwischen dem oberen und dem unteren Armglied erreicht und die Armglieder benötigen andererseits in Richtung quer zu ihrer Längserstrekkung einen nur geringen Bauraum. Die Längsmittelachse der oberen und der unteren Armglieder liegen dabei zumindest annähernd in einer gemeinsamen vertikalen Ebene.

An ihrem unteren Ende sind die unteren Armglieder 14b und 15b gelenkig an eine biegesteife Hand 23 angeschlossen, die an ihrer Unterseite 23a eine Nutzlast, beispielsweise einen Greifer tragen kann.

Im dargestellten Ausführungsbeispiel sind die beiden unteren Armglieder 14b,15b an einem gemeinsamen Gelenk 17 mit gemeinsamer horizontaler Drehachse, die parallel zu den Drehachsen der Servomotoren 13a und 13b verläuft, mit der Hand 23 gekoppelt, jedoch können die Drehachsen auch parallel zueinander versetzt sein. Auch hierbei ist vorgesehen, daß die Längsstreben 14b1, 14b2 bzw. 15b1,15b2 der unteren Armglieder 14b,15b an entgegengesetzten Endbereichen der Drehachse des Gelenks 17 angreifen und somit die Hand 23 zumindest abschnittsweise zwischen sich aufnehmen. Auf diese Weise können die von der Nutzlast der Hand 23 resultierenden Belastungen im wesentlichen mittig in die unteren Armglieder 14b,15b eingeleitet werden, so daß übermäßige Biege- und Torsionsmomente verhindert sind. Zusätzlich besitzt die Hand 23 außenseitige wandartige Ansätze 23d, die von der Drehachse des Gelenks 17 durchdrungen sind und die unteren Enden der Längsstreben 14b1,14b2,15b1,15b2 zwischen sich aufnehmen.

Wie die Figur zeigt, liegen die beiden oberen Armglieder 14a,15a und die beiden unteren Armglieder 14b,15b sowie die Hand 23 im wesentlichen in einer vertikalen, sich parallel zur Grundplatte 12 erstreckenden Ebene, so daß bei Betätigung eines oder beider Servomotoren 13a,13b die Hand 23 in dieser Vertikalebene verstellt werden kann.

Um die Hand 23 bei ihrer Verstellbewegung in vorbestimmter räumlicher Ausrichtung zu halten, so daß die Hand 23 eine reine Translationsbewegung ausführt, ist eine AusgleichsVorrichtung in Form zweier hintereinander geschalteter Parallelogrammgestänge vorgesehen. Ein oberes Parallelogrammgestänge umfaßt das obere Armglied 15a und eine parallel dazu verlaufende obere Ausgleichsstange 21, die an einem Gelenk 22 mit horizontaler Schwenkachse schwenkbar oberhalb des Servomotors 13b an der Grundplatte 12 gelagert ist. Am entgegengesetzten Ende der oberen Ausgleichsstange 21 ist diese an einem Gelenk 19a mit horizontaler Schwenkachse an einen Übertragungsrahmen 19 angeschlossen, der seinerseits schwenkbar an das Gelenk 18 angeschlossen ist. Der Übertragungsrahmen 19 besitzt desweiteren ein zweites Drehgelenk 19b mit horizontaler Schwenkachse, das das obere Ende einer unteren Ausgleichsstange 20 schwenkbar lagert, die zur Bildung eines unteren Parallelogrammgestänges parallel zu dem unteren Armglied 15b verläuft und an ihrem unteren Ende an einem Gelenk 23b mit horizontaler Schwenkachse gelenkig an eine Lagerplatte 23c der Hand 23 angeschlossen ist. Die untere Ausgleichsstange 20 verläuft dabei mit ihrem unteren Endabschnitt zwischen den beiden Längsstreben 14a1,14b1 des anderen unteren Armglieds 14b, wobei das Gelenk 23b auf der dem oberen Gelenk 18 des unteren Armglieds 15b abgewandten Seite des anderen unteren Armglieds 14b angeordnet ist. Die Lagerplatte 23c liegt zwischen den Längsstreben 14b1,14b2 bzw. 15b1,15b2 der unteren Armlieder 14b,15b und bildet im wesentlichen die vertikale Mittelebene der Hand 23. Die Lagerplatte 23c ist dabei von der Drehachse des Gelenks 17 sowie von Verbindungskörpern 14b4,15b4, die die freien unteren Enden der Längsstreben 14b1,14b2 bzw. 15b1, 15b2 sowie der zugeordneten Diagonalstreben 14b3 bzw. 15b3 halten und miteinander verbinden, durchdrungen, so daß ein kompakter, platzsparender Aufbau gegeben ist. Dabei stützen sich die Bauteile gegenseitig ab, indem die Hand 23 zumindest eines der unteren Armglieder 14b,15b derart konstruktiv durchdringt, daß zumindest eines der unteren Armglieder 14b,15b und/oder die Hand 23 zur Demontage zerlegt werden muß.

Alternativ zu der Ausgleichsvorrichtung mit den beiden Parallelogrammgestängen kann auch vorgesehen sein, daß die Hand mittels eines separaten Servomotors um das Gelenk 17 schwenkbar ausgebildet ist.

## Patentansprüche

1. Handhabungsvorrichtung insbesondere in einer Verpakkungsmaschine, mit einer Hand (23) zur Aufnahme einer Nutzlast und einer die Hand (23) lagernden Tragvorrichtung, die zwei in einer gemeinsamen Ebene motorisch verstellbare, mehrgliedrige Gelenkarme (14,15) umfaßt, die an ihrem einen Ende an einen Drehantrieb (13a,13b) und an ihrem entgegengesetzten Ende gelenkig an die Hand (23) angeschlossen sind, wobei jeder Gelenkarm (14,15) ein oberes Armglied (14a,15a) und ein gelenkig damit verbundenes unteres Armglied (14b,15b) umfaßt, das an die Hand (23) angelenkt ist, **dadurch gekennzeichnet, daß** jedem Gelenkarm (14,15) ein separater Drehantrieb (13a,13b) zugeordnet ist, der auf das obere Armglied (14a,15a) des jeweiligen Gelenkarms (14,15) einwirkt, und daß die unteren Armglieder (14b,15b) jeweils als ebenes Stabfachwerk ausgebildet sind.

2. Handhabungsvorrichtung nach Anspruch 1, **dadurch gekennzeichnet, daß** jedes untere Armglied (14b,15b) mit zumindest zwei in Längsrichtung des Armglieds verlaufenden Längsstreben (14b1,14b2,15b1,15b2) und zumindest einer Diagonalstrebe (14b3, 15b3) ausgebildet ist.

3. Handhabungsvorrichtung nach Anspruch 2, **dadurch gekennzeichnet, daß** die Enden der Längsstreben (14b1, 14b2,15b1,15b2) jedes unteren Armglieds (14b, 15b) das zugeordnete obere Armglied (14a,15a) zwischen sich aufnehmen.

4. Handhabungsvorrichtung nach einem der Ansprüche 1 bis 3, **dadurch gekennzeichnet, daß** die unteren Armglieder (14b, 15b) an einer gemeinsamen Drehachse (17) an die Hand (23) angelenkt sind.

5. Handhabungsvorrichtung nach Anspruch 4, **dadurch gekennzeichnet, daß** die unteren Enden der Längsstreben (14b1,14b2,15b1,15b2) jedes unteren Armglieds (14b, 15b) in entgegengesetzten Endbereichen der Drehachse (17) angeordnet sind und die Hand (23) zumindest teilweise zwischen sich aufnehmen.

6. Handhabungsvorrichtung nach einem der Ansprüche 1 bis 5, **gekennzeichnet durch** eine Ausgleichsvorrichtung (19,20,21), mittels der die Hand (23) bei ihrer Verstellungbewegung in vorbestimmter Ausrichtung relativ zu einer Basis (12) haltbar ist.

7. Handhabungsvorrichtung nach Anspruch 6, **dadurch gekennzeichnet, daß** die Ausgleichsvorrichtung zumindest ein Parallelogrammgestänge umfaßt.

8. Handhabungsvorrichtung nach Anspruch 7, **dadurch gekennzeichnet, daß** die Ausgleichsvorrichtung eine obere Ausgleichsstange (21), die parallel zu dem einem oberen Armglied (15a) verläuft, einen am Gelenk (18) dieses einen oberen Armglieds (15a) gelenkig gelagerten Übertragungsrahmen (19), an dem die obere Ausgleichsstange (21) im Abstand zum Gelenk (18) gelenkig ausgeschlossen ist, und eine untere Ausgleichsstange (20) umfaßt, die an dem Übertragungsrahmen (19) im Abstand zum Gelenk (18) gelenkig ausgeschlossen ist und im wesentlichen parallel zu dem zugeordneten unteren Armglied (15b) verläuft.

9. Handhabungsvorrichtung nach Anspruch 8, **dadurch gekennzeichnet, daß** die untere Ausgleichsstange (20) mit ihrem unteren Ende das andere untere Armglied (14b) durchdringt.

10. Handhabungsvorrichtung nach einem der Ansprüche 1 bis 9, **dadurch gekennzeichnet, daß** die Hand (23) zumindest eines der unteren Armglieder (14b,15b) derart konstruktiv durchdringt, daß zumindest eines der unteren Armglieder (14b,15b) und/oder die Hand (23) zur Demontage zerlegt werden muß.

11. Handhabungsvorrichtung nach einem der Ansprüche 1 bis 10, **dadurch gekennzeichnet, daß** die Drehachsen der Drehantriebe (13a,13b) parallel zueinander verlaufen.

12. Handhabungsvorrichtung nach einem der Ansprüche 1 bis 11, **dadurch gekennzeichnet, daß** die Hand (23) schwenkbar gelagert ist und einen eigenen Drehantrieb aufweist.

13. Handhabungsvorrichtung nach einem der Ansprüche 1 bis 12, **dadurch gekennzeichnet, daß** die Drehantriebe (13a,13b) von Servomotoren gebildet sind.
